# EUROPÄISCHE PATENTANMELDUNG

(11) **EP 1 136 825 A1**
(43) Veröffentlichungstag der Anmeldung: **26.09.2001**
(21) Anmeldenummer: 00400694.6
(22) Anmeldetag: 13.03.2000
(51) Int. Cl.: G01N 35/04, B65G 49/00

(54) **Vorrichtung zur automatisierten Ordnung, Erfassung und Einlagerung von Reaktionsbehältern**

(71) Anmelder: Biopsytec S.A.R.L., 91026 Evry Cédex (FR)
(72) Erfinder: Die Erfindernennung liegt noch nicht vor
(74) Vertreter: Schubert, Klemens, Dr.

(57) **Zusammenfassung**

Beschrieben ist eine Vorrichtung zur automatisierten Sortierung, Erfassung und Einlagerung von Reaktionsbehältern, umfassend eine Einheit zur Zuführung von Reaktionsbehältern, eine Station zur Ausgabe von Reaktionsbehältern, eine Einheit zum Ordnen der Reaktionsbehälter, eine Einheit zum Vereinzeln der Reaktionsbehälter, eine Fördereinrichtung für Reaktionsbehälter innerhalb der Vorrichtung, mindestens ein Rack zur Aufnahme von Reaktionsbehältern, eine Fördereinrichtung zum Transport von Racks innerhalb der Vorrichtung, mindestens eine Komponente zur Erfassung von Daten, ein intern oder extern angeordnetes Magazin zur Einlagerung von Racks, eine interne oder externe Steuer- und Regeleinrichtung sowie eine integrierte oder an einer entsprechenden Schnittstelle angekoppelte Datenbank.

Weiterhin sind verschiedene Ausführungsmöglichkeiten der erfindungsgemäßen Vorrichtung beschrieben.

Die Vorrichtung weist einen hohen Automatisierungsgrad bei der Erfassung und Einlagerung von Reaktionsbehältern auf und minimiert drastisch die Fehlerrate gegenüber der manuellen Erfassung und Einsortierung von Reaktionsbehältern in herkömmliche Lagersysteme.

## Beschreibung

Die vorliegende Erfindung betrifft eine Vorrichtung zur automatisierten Ordnung, Erfassung und Einlagerung von Reaktionsbehältern

Der Stand der Technik im Bereich der organisierten Einlagerung von Reaktionsbehältern bedingt, daß für Analysezwecke oder andersartige Weiterverarbeitung jeder Reaktionsbehälter manuell in vorhandene Aufnahmen einsortiert wird und dabei die dem Reaktionsbehälter zugeordneten Informationen für eine Weiterverarbeitung ebenfalls manuell dokumentiert werden. Das geschieht in Handarbeit, wobei eventuell die probenspezifischen Daten z. B. in Form einer Markierung des Reaktionsbehälters mittels elektronischer Datenerfassung eingelesen und in eine Datenbank überführt werden. Dabei ist das hohe Fehlerpotential durch menschliche Arbeit nicht zu unterschätzen.

Für ein wirtschaftliches Probenmanagement ist diese Sachlage äußerst mißlich, da hohe Personalkosten und hohe Durchlaufzeiten einen beträchtlichen Kostenfaktor darstellen.

Aufgabe der vorliegenden Erfindung ist es, eine Vorrichtung zur Verfügung zu stellen, welche die Nachteile der bekannten Vorrichtungen überwindet.

Im Zuge wachsenden Bedarfs nach High-Troughput-Analytik, bei der das maschinelle Sortieren und Registrieren sowie die automatisierte Verarbeitung von Proben in Reaktionsbehältern aus wirtschaftlichen Gründen unverzichtbar sind, stellt die erfindungsgemäße Vorrichtung eine geeignete Lösung der Aufgabe dar.

Die Aufgabe wird erfindungsgemäß durch die Merkmale des Hauptanspruchs gelöst. Zweckmäßige Ausgestaltungen der erfindungsgemäßen Vorrichtung sind in den abhängigen Ansprüchen gekennzeichnet.

Die vorliegende Erfindung betrifft eine Vorrichtung zur automatisierten Ordnung, Erfassung und Einlagerung von Reaktionsbehältern, wobei diese über eine Einheit zur Zuführung von Reaktionsbehältern, eine Einheit zum Ordnen der Reaktionsbehälter, eine Einheit zum Vereinzeln der Reaktionsbehälter, eine Fördereinrichtung für Reaktionsbehälter innerhalb der Vorrichtung, mindestens ein Rack zur Aufnahme von Reaktionsbehältern, eine Fördereinrichtung zum Transport von Racks innerhalb der Vorrichtung, mindestens eine Komponente zur Erfassung von Daten, ein intern oder extern angeordnetes Magazin zur Einlagerung von Racks, eine interne oder externe Steuer- und Regeleinrichtung sowie eine integrierte oder an einer entsprechenden Schnittstelle angekoppelte Datenbank verfügt.

Erfindungsgemäß vorteilhaft ist es, daß die Einheit zur Zuführung von Reaktionsbehältern über einen Bunker zur Aufnahme von ungeordneten Reaktionsbehältern in Form von Schüttgut verfügt.

Erfindungsgemäß bevorzugt ist es, daß die Einheit zur Zuführung von Reaktionsbehältern zur Aufnahme bereits von geordneten oder in Racks oder Magazinen gelagerten Reaktionsbehältern ausgeführt ist.

Weiterhin bevorzugt ist eine erfindungsgemäße Vorrichtung, wobei die Einheit zur Zuführung von Reaktionsbehältern als Übergabestation zur Aufnahme von Reaktionsbehältern aus z. B. im Bearbeitungsprozeß vorangestellten Vorrichtungen, also quasi als Schnittstelle, ausgeführt ist.

Bevorzugt ist auch eine Vorrichtung, umfassend zusätzlich eine Station zur Ausgabe von Reaktionsbehältern.

Eine erfindungsgemäße Vorrichtung ist ferner dadurch gekennzeichnet, daß die Einheit zur Zuführung von Reaktionsbehältern und die Station zur Ausgabe von Reaktionsbehältern an einer Position angeordnet sind.

Bevorzugt ist auch eine Vorrichtung, umfassend zusätzlich eine Station zur Zuführung von Racks und/oder umfassend zusätzlich eine Einheit zur Ausgabe von Racks.

Besonders bevorzugt ist eine erfindungsgemäße Vorrichtung bei der die Einheiten zum Ordnen und Vereinzeln und Zuführen der Reaktionsbehälter in Racks als kombinierte Funktionseinheit ausgeführt sind. Dabei ist es besonders vorteilhaft, daß die Fördereinrichtung für Reaktionsbehälter innerhalb der Vorrichtung bidirektional ausgeführt ist. Ganz besonders bevorzugt ist es, dass die Fördereinrichtung für Reaktionsbehälter innerhalb der Vorrichtung ringförmig ausgeführt ist.

Erfindungsgemäß bevorzugt ist auch eine Vorrichtung, bei der die Racks zur Aufnahme der Reaktionsbehälter als mit der Vorrichtung fest gekoppelte Bestandteile ausgeführt sind. Bevorzugt ist hierbei auch, daß die Racks zur Aufnahme der Reaktionsbehälter als zusätzliche, nicht mit der Vorrichtung gekoppelte, Elemente ausgeführt sind, die z. B. das Format von Mikrotiterplatten besitzen.

Es ist erfindungsgemäß weiterhin bevorzugt, daß die Fördereinrichtung zum Transport der Racks innerhalb der erfindungsgemäßen Vorrichtung bidirektional ausgeführt ist. Bevorzugt ist hierbei auch, daß die Fördereinrichtung zum Transport der Racks ringförmig innerhalb der erfindungsgemäßen Vorrichtung ausgeführt ist

Die erfindungsgemäße Vorrichtung ist ferner dadurch gekennzeichnet, daß das Magazin zur Einlagerung von Racks zusätzlich einzelne Reaktionsbehälter aufnehmen kann.

Bevorzugt ist auch, daß das Magazin oder Teile des Magazins zur Einlagerung ausschließlich einzelne Reaktionsbehälter aufnehmen können.

Erfindungsgemäß bevorzugt ist ferner, daß das Magazin zur Aufnahme von Racks oder einzelnen Reaktionsbehältern aus einer oder mehreren Komponenten besteht, die entweder innerhalb der Vorrichtung oder bei entsprechender Auslegung der Fördereinrichtungen außerhalb der erfindungsgemäßen Vorrichtung angeordnet sind.

Bevorzugt ist außerdem, daß das Magazin zur Aufnahme von Racks oder Reaktionsbehältern modular und somit mit erweiterbarer Kapazität ausgeführt ist.

Erfindungsgemäß bevorzugt ist eine Vorrichtung, wobei die Steuer- und Regeleinrichtung als Computer ausgeführt ist, der über eine Schnittstelle zur Übergabe von Daten verfügt. Dabei ist ganz besonders bevorzugt, daß die Datenbank über mindestens eine Schnittstelle verfügt, über die ein Datenaustausch mit vorangestellten oder nachfolgend angeordneten Laborgeräten realisiert werden kann.

Weiterhin bevorzugt ist es, daß zusätzlich eine Station zum Markieren von Reaktionsbehältern und/oder Racks integriert ist.

Besonders bevorzugt ist eine erfindungsgemäße Vorrichtung, umfassend eine Station zum Zentrifugieren von Reaktionsbehältern, Racks oder Magazinen und/oder zusätzlich mindestens einen Reagenzienbehälter mit nachgeordneter Dosiereinrichtung.

Die vorliegende Erfindung betrifft somit eine Vorrichtung zur automatisierten Ordnung, Erfassung und Einlagerung von Reaktionsbehältern, welche folgende Elemente besitzt:
- einen Station, in die Reaktionsbehälter ungeordnet oder geordnet eingebracht werden können,
- ein System zum Ordnen und Vereinzeln der Reaktionsbehälter in jeweils gleiche Lage,
- eine Komponente zum Zuführen vereinzelter Reaktionsbehälter in Racks,
- eine Fördereinrichtung von Racks in Magazine oder zu anderen Einheiten der Vorrichtung,
- ein oder mehrere Komponenten zur Erfassung von Daten in Form von Markierungen an Reaktionsbehältern, Racks und Magazinen,
- eine Steuerung, vorteilhaft bestehend aus einem PC, die den Ablauf aller Vorgänge innerhalb der Vorrichtung regelt und als Schnittstelle zur Weitergabe von Daten verwendet werden kann.

Vorteilhafte Ausführungen der erfindungsgemäßen Vorrichtung sind zusätzlich ausgestattet mit einem oder mehreren der nachstehend genannten Merkmale:
- Station zum Öffnen von Reaktionsbehältern z. B. durch Durchstoßen des Dekkels,
- Einrichtungen zum Einbringen von Reagenzien in die Reaktionsbehälter,
- Einrichtungen zur Inkubation der Reaktionsbehälter (Temperaturzykeln)

Die erfindungsgemäße Vorrichtung bietet in noch nicht dagewesener Weise eine Minimierung des Aufwandes zur Erfassung und Einlagerung von Proben.

Die o. g. Reaktionsbehälter können alle Arten von handelsüblichen Reaktionsgefäßen wie z. B. Cryo-Röhrchen oder Behälter für PCR (Polymerase chain reaction) sein. Für die genannte Anwendung sollten diese Reaktionsbehälter zweckmäßig mit einer Markierung wie z. B. einem ein- oder zweidimensionalen Barcode versehen sein, um ein automatisiertes Einlesen der behälterspezifischen Daten zu ermöglichen. Die Markierung der Behälter kann ebenso als Zifferncode, alphanumerische Markierung, graphische Codierung oder ähnliches oder als Kombination dieser Möglichkeiten ausgeführt sein.

Eine individuelle Markierung nicht markierter Reaktionsbehälter kann jedoch bei einer vorteilhaften Ausführung der erfindungsgemäßen Vorrichtung durch eine integrierte Station übernommen werden.

Die Einlagerung der Reaktionsbehälter erfolgt in entsprechenden Racks, d. h. Containern mit mehreren Aufnahmen für einzelne Reaktionsbehälter, die in einem Raster angeordnet sind. Diese Racks sind vorteilhaft ebenfalls mit einer maschinenlesbaren Markierung versehen, die wie bei den Reaktionsbehältern als ein- oder zweidimensionaler Barcode, als Zifferncode, alphanumerische Markierung, graphische Codierung oder ähnliches oder als Kombination der genannten Möglichkeiten ausgeführt sein kann. In einer Datenbank können so die Informationen aus der Markierung des Reaktionsbehälters mit denen des Racks und der Position des Reaktionsbehälters im Rack verknüpft werden.

Die Racks wiederum werden mit einem Transportsystem, von einer Steuerung überwacht, in ein Lagersystem eingelagert, wobei vorteilhaft die Lagerposition mit den spezifischen Daten des Racks (Markierung des Racks und Position des Reaktionsbehälters im Rack) oder den spezifischen Daten jedes Reaktionsbehälters (Markierung des Reaktionsbehälters und Position im Rack) in einer Datenbank verknüpft wird. Die als Lagersystem verwendeten Magazine können verschiedenartige Merkmale aufweisen. Ausführungsabhängig kann der Lagerraum gekühlt oder beheizt oder in anderer Weise klimatisiert werden, um eine dem Anwendungsfall angepaßte Umgebung zur Lagerung der Reaktionsbehälter zu schaffen.

Somit ist eine wirtschaftliche Probenerfassung, Probenregistrierung und Probeneinlagerung gewährleistet.

Die erfindungsgemäße Vorrichtung bietet die Möglichkeit, ungeordnet eingebrachte Reaktionsbehälter (z. B. über einen Schütttrichter) zu verarbeiten, indem diese mittels entsprechender Einrichtungen in geordnete Lage gebracht und zur Zuführung in andere Stationen der Vorrichtung vereinzelt werden. Zusätzlich ist auch die Verarbeitung bereits geordneter oder in Racks befindlichen Reaktionsbehältern über eine oder mehrere entsprechend ausgeführte Stationen realisierbar. Auch eine Übernahme von Reaktionsbehältern aus vorgelagerten Geräten ist mit einer dafür ausgelegten Station möglich.

Als weitere Anwendung ist die Aufbereitung von bestehenden Datenbeständen zu nennen. Dabei können vorhandene und/oder bereits eingelagerte Reaktionsbehälter erneut die Ordnung, Sortierung und Einlagerung durchlaufen, um eventuelle Fehler in den Datenbeständen zu beheben.

Eine Zusammenfassung von Funktionseinheiten in einer Station der Vorrichtung ist denkbar.

Um eine kontrollierte Auslagerung von einzelnen Reaktionsbehältern, Racks oder Magazinen vornehmen zu können, ist es sinnvoll, die erfindungsgemäße Vorrichtung mit einer oder mehreren Einheiten zur Ausgabe der genannten Reaktionsbehälter, Racks oder Magazinen auszustatten.

Alle durchgeführten Ein- und Auslagerungsschritte werden bei der erfindungsgemäßen Vorrichtung erfaßt und stehen als Daten zur Weitergabe an andere Geräte zur Verfügung. Dabei ist es sinnvoll, alle durchgeführten Schritte innerhalb der Vorrichtung zu dokumentieren und diese Daten, verknüpft mit den spezifischen Daten des Reaktionsbehälters in einer Datenbank abzulegen und zu verwalten.

Die Erweiterung der Lagerkapazitäten erfolgt bei einer vorteilhaften Ausführung der erfindungsgemäßen Vorrichtung an einer oder mehreren Stationen zur Zuführung von Racks und/oder Magazinen. Dabei ist ein modularer Aufbau des Lagersystems von Vorteil, so daß eine Erweiterung mit identischen Systemkomponenten mit geringem Aufwand möglich ist und diese Kapazitätserweiterung problemlos in die Datenbank integriert werden kann.

Der Transport der Reaktionsbehälter, Racks und Magazine erfolgt über entsprechend dimensionierte Fördereinrichtungen, die vorteilhaft bidirektional ausgeführt sind, so daß der Transport zwischen einzelnen Stationen der erfindungsgemäßen Vorrichtung in beide Richtungen möglich ist.

Weiterhin ist es vorteilhaft die Fördereinrichtungen ringförmig auszuführen, um einen ökonomischen Transport der genannten Reaktionsbehälter und Racks zwischen den Stationen innerhalb der Vorrichtung zu ermöglichen.

Die Racks zur Aufnahme der Reaktionsbehälter können als fest mit der Fördereinrichtung gekoppelte Elemente ausgeführt sein. Vorteilhaft werden jedoch lose Racks, die z. B. das Format von Mikrotiterplatten o. ä. besitzen, verwendet, um Kompatibilität zu bekannten Laborgeräten zu gewährleisten.

In einer speziellen Ausführung der erfindungsgemäßen Vorrichtung können die Magazine so ausgeführt sein, daß einzelne Reaktionsbehälter direkt eingelagert werden können und nicht erst in Racks aufgenommen werden müssen. Kombinierte Magazine zur Aufnahme von Racks mit Reaktionsbehältern und/oder einzelnen Reaktionsbehältern sind denkbar.

Zur Verarbeitung von Reaktionsbehältern oder Racks ohne individuelle Markierung ist es vorteilhaft, wenn die erfindungsgemäße Vorrichtung mit einer Station zur Ein- oder Aufbringung von Markierungen auf die Reaktionsbehälter bzw. Racks ausgerüstet ist. Dies kann z. B. mittels Lasermarkierung oder Aufbringung eines beschrifteten Etiketts oder durch Aufdrucken, Aufstempeln oder Aufspritzen von Markierungen erfolgen. Vorteilhaft sind alle zur Verwendung kommenden Markierungen maschinenlesbar, so daß eine automatisierte Datenerfassung innerhalb der Vorrichtung möglich ist.

Zur Vorbereitung der in Reaktionsbehältern befindlichen Proben ist es sinnvoll, eine oder mehrere Stationen zur geregelten Klimatisierung der Reaktionsbehälter in der erfindungsgemäßen Vorrichtung anzuordnen. Dies kann entweder in speziell für einzelne Reaktionsbehälter oder für Racks dimensionierten Einheiten oder auch im Magazin erfolgen. Auch eine Kühlung der Reaktionsbehälter in den Racks oder Magazinen zur Langzeitlagerung ist sinnvoll.

Weitere Varianten der erfindungsgemäßen Vorrichtung können mit Systemen zur Aufbereitung der Proben zu Analysezwecken wie z. B. Einheiten zum Öffnen von Reaktionsbehältern, Komponenten zum Einbringen von Reagenzien oder Einheiten zur Analyse der in den Reaktionsbehältern befindlichen Lösungen oder Proben ausgestattet sein. In den genannten Fällen ist eine Anbindung der Vorrichtungskomponenten an die genannte Datenbank sinnvoll, um eine vollständige Erfassung und Dokumentation aller innerhalb der erfindungsgemäßen Vorrichtung durchgeführten Prozeßschritte zu gewährleisten.

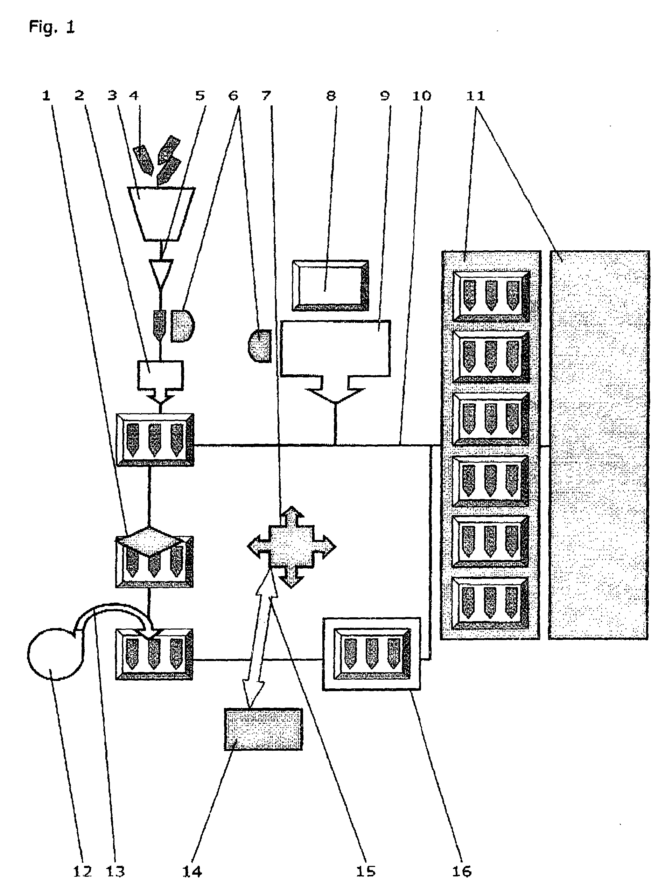

Die Figur 1 zeigt ein Ausführungsbeispiel einer erfindungsgemäßen Vorrichtung in Form eines Blockschaltbildes.

Bei der abgebildeten Vorrichtung werden einzelne Reaktionsbehälter (4) in variablen Mengen in den Schüttrichter einer Station zur Aufnahme ungeordneter Reaktionsbehälter (3) eingebracht. Eine nachfolgend angeordnete Station zum Ordnen und Vereinzeln von Reaktionsbehältern (5) bringt die Reaktionsbehälter in eine identische Lage und führt jeweils einzelne Probenbehälter über eine Fördereinrichtung (10) der Komponente zum Zuführen von Reaktionsbehältern in Racks (2) zu. Dabei werden die behälterspezifischen Daten, die sich aus eine am Behälter angebrachten Markierung ergeben, von einer Komponente zur Erfassung von Daten (6) gelesen und der Steuer- und Regeleinrichtung (7) bzw. der Datenbank (14) zugeführt.

Einzelne oder magazinierte Racks (2) werden der Vorrichtung an der Station zur Zuführung von Racks (9) zugeführt. Die spezifischen Daten jedes Racks (2) werden vor der Übergabe des Racks in den weiteren Ablauf von einer Komponente zur Erfassung von Daten (6) gelesen und an die Steuer- und Regeleinrichtung (7) bzw. an die Datenbank (14) übermittelt.

Ein von der Komponente zum Zuführen von Reaktionsbehältern in Racks (2) gegriffener Reaktionsbehälter (4) wird einer speziellen Position in einem bekannten Rack (8) zugeführt und die Daten über Position und Rack (2) der Datenbank (14) übermittelt und dort mit den Daten des Reaktionsbehälters (4) verknüpft.

In weiteren Schritten werden die Racks (8) mit Reaktionsbehältern (4) mittels der Fördereinrichtung (10) zu einer Einheit zum Öffnen von Reaktionsbehältern (1) bewegt, wo der Inhalt der Reaktionsbehälter (4) durch Aufklappen oder Durchstoßen der Deckel oder anderer Teile der Reaktionsbehälter (4) zugänglich gemacht wird.

Die Fördereinrichtung (10) bewegt das Rack weiter zu einer Station zum Einbringen von Reagenzien, bestehend aus einem Reagenzienbehälter (12) und einer Dosiereinrichtung (13). Zur Aufbereitung des Inhalts der Reaktionsbehälter wird aus dem Reagenzienbehälter (12) mittels der Dosiereinrichtung (13) gezielt das gewünschte Lösungsmittel o. ä. in den Reaktionsbehälter (4) eingebracht. Die Fördereinrichtung innerhalb der Vorrichtung (10) führt das derart verarbeitete Rack (8) einer Station zur Inkubation (16) zu, in der die Reaktionsbehälter (4) gezielt klimatischen Veränderungen wie z. B. Temperaturzyklen ausgesetzt sind.

Zur Lagerung der Racks (8) mit den Reaktionsbehältern (4) werden diese von der Fördereinrichtung (10) in Magazine (11) überführt, wo sie an einer bestimmten Lagerposition eingelagert werden. Die Daten über den Lagerort im Magazin (11) werden in der Datenbank (14) mit den bereits vorhandenen Daten über Identität des Reaktionsbehälters (4), Position des Reaktionsbehälters (4) im Rack (8), Identität des Racks (8) und den Daten der durchgeführten Prozeßschritte verknüpft.

Durch die Verknüpfung zwischen Steuereinrichtung (7) und Datenbank (15) ist es möglich, jederzeit auf einen speziellen Reaktionsbehälter zuzugreifen, indem die Daten über Position, Rack (8) und Magazin (11) verarbeitet werden.

Eine gezielte Ausgabe einzelner Reaktionsbehälter (4) ist durch gesteuertes Auslagern eines Racks (8) aus dem Magazin (11), Fördern des Racks (8) zur Komponente zum Zuführen von Reaktionsbehältern in Racks (2) mittels der Fördereinrichtung (10) möglich, indem das Handhabungssystem innerhalb der Komponente zum Zuführen von Reaktionsbehältern in Racks (2) den Reaktionsbehälter (4) aus dem Rack (8) entnimmt und zu einer speziellen Ausgabeposition bewegt, wo er von nachgeordneten Laborgeräten oder von Laborpersonal übernommen werden kann.

Eine Erweiterung der Lagerkapazität kann durch Integration weiterer Magazine (11) in die Vorrichtung erzielt werden.

### Bezugszeichenliste

- 1: Einheit zum Öffnen von Reaktionsbehältern
- 2: Komponente zum Zuführen von Reaktionsbehältern in Racks
- 3: Station zur Aufnahme von ungeordneten Reaktionsbehältern
- 4: Reaktionsbehälter
- 5: Station zum Ordnen und Vereinzeln von Reaktionsbehältern
- 6: Komponente zur Erfassung von Daten
- 7: Steuer- und Regeleinrichtung
- 8: Rack
- 9: Station zur Zuführung von Racks
- 10: Fördereinrichtung innerhalb der Vorrichtung
- 11: Magazin
- 12: Reagenzienbehälter
- 13: Dosiereinrichtung
- 14: Datenbank
- 15: Verknüpfung zwischen Steuereinrichtung und Datenbank
- 16: Station zur Inkubation (Thermozykeln)

## Patentansprüche

1. Vorrichtung zur automatisierten Ordnung, Erfassung und Einlagerung von Reaktionsbehältern, **dadurch gekennzeichnet daß** sie über eine Einheit zur Zuführung von Reaktionsbehältern, eine Einheit zum Ordnen der Reaktionsbehälter, eine Einheit zum Vereinzeln der Reaktionsbehälter, eine Fördereinrichtung für Reaktionsbehälter innerhalb der Vorrichtung, mindestens ein Rack zur Aufnahme von Reaktionsbehältern, eine Fördereinrichtung zum Transport von Racks innerhalb der Vorrichtung, mindestens eine Komponente zur Erfassung von Daten, ein intern oder extern angeordnetes Magazin zur Einlagerung von Racks, eine interne oder externe Steuer- und Regeleinrichtung sowie eine integrierte oder an einer entsprechenden Schnittstelle angekoppelte Datenbank verfügt.

2. Vorrichtung gemäß Anspruch 1, **dadurch gekennzeichnet, daß** die Einheit zur Zuführung von Reaktionsbehältern über einen Bunker zur Aufnahme von ungeordneten Reaktionsbehältern in Form von Schüttgut und/oder eine Aufnahme für bereits geordnete oder in Racks oder Magazinen gelagerte Reaktionsbehälter verfügt.

3. Vorrichtung gemäß Anspruch 1, wobei die Einheit zur Zuführung von Reaktionsbehältern als Übergabestation zur Aufnahme von Reaktionsbehältern aus z. B. im Bearbeitungsprozeß vorangestellten Vorrichtungen, also quasi als Schnittstelle, ausgeführt ist.

4. Vorrichtung gemäß einem der voranstehenden Ansprüche, umfassend zusätzlich eine Station zur Ausgabe von Reaktionsbehältern, wobei gegebenenfalls die Einheit zur Zuführung von Reaktionsbehältern und die Station zur Ausgabe von Reaktionsbehältern an einer Position angeordnet sein können.

5. Vorrichtung gemäß einem der voranstehenden Ansprüche, umfassend zusätzlich eine Station zur Zuführung von Racks und/oder eine Einheit zur Ausgabe von Racks, wobei gegebenenfalls beide an einer Position angeordnet sein können.

6. Vorrichtung gemäß einem der voranstehenden Ansprüche, wobei die Fördereinrichtung für Reaktionsbehälter innerhalb der Vorrichtung bidirektional ausgeführt ist.

7. Vorrichtung gemäß einem der voranstehenden Ansprüche, wobei die Fördereinrichtung für Reaktionsbehälter innerhalb der Vorrichtung ringförmig ausgeführt ist.

8. Vorrichtung gemäß einem der voranstehenden Ansprüche, **dadurch gekennzeichnet, daß** die Racks zur Aufnahme der Reaktionsbehälter als mit der Vorrichtung fest gekoppelte Bestandteile ausgeführt sind und/oder die Racks zur Aufnahme der Reaktionsbehälter als zusätzliche, nicht mit der Vorrichtung gekoppelte, Elemente ausgeführt sind, die das Format von bekannten Mikrotiterplatten mit 96 oder 384 gerasterten Positionen oder ein vorrichtungsspezifisches Format besitzen.

9. Vorrichtung gemäß einem der voranstehenden Ansprüche, **dadurch gekennzeichnet, daß** die Fördereinrichtung zum Transport der Racks innerhalb der erfindungsgemäßen Vorrichtung bidirektional und/oder ringförmig innerhalb der erfindungsgemäßen Vorrichtung ausgeführt ist.

10. Vorrichtung gemäß einem der voranstehenden Ansprüche, **dadurch gekennzeichnet, daß** das Magazin oder ein Teil des Magazins zur Einlagerung von Racks zusätzlich und/oder ausschließlich einzelne Reaktionsbehälter aufnehmen kann.

11. Vorrichtung gemäß einem der voranstehenden Ansprüche, **dadurch gekennzeichnet, daß** das Magazin zur Aufnahme von Racks oder einzelnen Reaktionsbehältern aus einer oder mehreren Komponenten besteht, die entweder innerhalb der Vorrichtung oder bei entsprechender Auslegung der Fördereinrichtungen außerhalb der erfindungsgemäßen Vorrichtung angeordnet sind.

12. Vorrichtung gemäß einem der voranstehenden Ansprüche, **dadurch gekennzeichnet, daß** das Magazin zur Aufnahme von Racks und/oder Reaktionsbehältern modular und somit mit erweiterbarer Kapazität ausgeführt ist.

13. Vorrichtung gemäß einem der voranstehenden Ansprüche, wobei die Steuer- und Regeleinrichtung als Computer ausgeführt ist, der über eine Schnittstelle zur Übergabe von Daten verfügt.

14. Vorrichtung gemäß einem der voranstehenden Ansprüche, **dadurch gekennzeichnet, daß** die Datenbank über mindestens eine Schnittstelle verfügt, über die ein Datenaustausch mit vorangestellten oder nachfolgend angeordneten Laborgeräten realisiert werden kann.

15. Vorrichtung gemäß einem der vorangegangen Ansprüche, **dadurch gekennzeichnet, daß** zusätzlich eine Station zum Markieren von Reaktionsbehältern und/oder Racks integriert ist.

16. Vorrichtung gemäß einem der voranstehenden Ansprüche, umfassend eine Station zum Zentrifugieren und/oder Inkubieren und/oder Klimatisieren von Reaktionsbehältern, Racks oder Magazinen.

17. Vorrichtung gemäß einem der voranstehenden Ansprüche, umfassend zusätzlich mindestens einen Reagenzienbehälter mit nachgeordneter Dosiereinrichtung.
